# EUROPEAN PATENT SPECIFICATION

(11) **EP 4 089 581 B1**
(45) Date of publication and mention of the grant of the patent: **13.08.2025**
(21) Application number: 22172165.7
(22) Date of filing: 06.05.2022
(51) Int. Cl.: G06N 3/02, G06N 3/08, G06F 3/03

(54) **MACHINE LEARNING ASSISTED CONTACTLESS CONTROL OF A PHYSICAL DEVICE THROUGH A USER DEVICE**
MASCHINENLERN-UNTERSTÜTZTE BERÜHRUNGSLOSE STEUERUNG EINER PHYSISCHEN VORRICHTUNG DURCH EINE BENUTZERVORRICHTUNG
COMMANDE SANS CONTACT ASSISTÉ PAR APPRENTISSAGE AUTOMATIQUE D'UN DISPOSITIF PHYSIQUE PAR L'INTERMÉDIAIRE D'UN DISPOSITIF UTILISATEUR

(30) Priority: 10.05.2021 US 202163201712 P; 27.04.2022 US 202217661017
(43) Date of publication of application: 16.11.2022
(73) Proprietor: Carrier Corporation, Palm Beach Gardens, FL 33418 (US)
(72) Inventor: BASU, Amit, 500081 Hyderabad (IN); JALISATGI, Akil Vivek, 500081 Hyderabad (IN)
(74) Representative: Dehns

(56) References cited:
- CN-A- 109 218 145
- CN-A- 111 942 979

## Description

The invention relates to a system for contactless control of a physical device and to a method for contactless control of a physical device.

Electric/electronic devices generally use control panels for control operations. Different devices have different types of control panels. In a lot of cases, to interact with these devices, a user touches the control panel to enter his control commands. In some cases, touching the control panel may be problematic (e.g., risk of spreading infection via touch in case of disease).

CN 109 218 145 A discloses a display method, system and device for an IOT device control interface and a storage medium. The method comprises that a client acquires a first image related to an IOT device and transmits the first image to a control center; the control center identifies a device identification number by a set machine learning algorithm model; if succeeding in identification, the control center returns the device identification number, and the client displays a corresponding control interface; if failing to identify the device identification number, the control center returns a device identification number list, and the client selects the device identification number according to a user instruction and sends a first image storage signal to the control center; the control center stores the first image identified by the user in an image training set, wherein the image training set includes an image marked with the device identification number and is used for training the machine learning algorithm model. The method automatically displays the control interface of the IOT device through image recognition.

CN 111 942 979 A discloses a non-contact key system and a control method thereof. The non-contact key system comprises an identification control device and controlled equipment, wherein the recognition control device is used for taking a picture of the space in front of a lens, performing image recognition on the taken picture and outputting a corresponding digital control instruction to the controlled equipment when digital information and control information are recognized; and the controlled equipment is used for performing the corresponding digital control according to the digital control instruction. Corresponding numbers are input in an image recognition mode.

The invention is set out in the independent claims. Preferred embodiments are defined by the dependent claims. Aspects of the disclosure relate to methods, apparatuses, and/or systems for contactless control of a physical device using a user device.

Viewed from a first aspect, a system for contactless control of a physical device comprises at least one processor and memory storing instructions executable by the at least one processor. The instructions when executed cause the system to obtain one or more images of a physical device; identify the physical device and a control panel of the physical device using the one or more images; train, using the obtained one or more images and the identified physical device and control panel, a plurality of machine learning control operations models of a machine learning system, using supervised learning, to determine control operations of one or more components of the control panel; and deliver a trained control operations model of the plurality of control operations models to a user device to facilitate contactless control of the physical device by the user device.

The instructions cause the system to map one or more visual elements in the one or more images with one or more control operations of the control panel; and send the mapping information to the user device to facilitate contactless control of the physical device by the user device.

The instructions cause the system to train, using the trained control operations model and the identified physical device and control panel, a mapping model to map the one or more visual elements in the one or more images with one or more control operations of the control panel; and deliver the trained mapping model to the user device.

Optionally, the trained control operations and mapping models are delivered to the user device by the physical device.

Optionally, the trained mapping model maps visual elements of the one or more components of the control panel, the visual elements obtained from a live image feed of the control panel by the user device and displayed on a touch screen on the user device.

Optionally, the physical device is configured to: deliver a command language interface to the user device to facilitate interaction between the user device and the control panel; receive a control command from the user device, the control command being determined based on a touch event of a visual element of the visual elements on the touch screen; and perform the received control command.

Viewed from another aspect, the invention provides a method for contactless control of a physical device. The method is implemented in computing system comprising at least one processor and memory storing instructions. The method comprises: obtaining a plurality of images of a physical device; identifying the physical device and a control panel of the physical device; training, using supervised learning, a plurality of machine learning control operations models of a machine learning system, to determine control operations of one or more components of the control panel; and delivering a trained control operations model of the plurality of control operations models to a user device to facilitate contactless control of the physical device by the user device.

The method comprises:
mapping one or more visual elements in the one or more images with one or more control operations of the control panel; and
sending the mapping information to the user device to facilitate contactless control of the physical device by the user device.

The method comprises:
training, using the trained control operations model and the identified physical device and control panel, a mapping model to map the one or more visual elements in the one or more images with one or more control operations of the control panel; and
delivering the trained mapping model to the user device.

Optionally, the trained control operations and mapping models are delivered to the user device by the physical device.

Optionally, the trained mapping model maps visual elements of the one or more components of the control panel, the visual elements obtained from a live image feed of the control panel by the user device and displayed on a touch screen on the user device.

Optionally, the physical device is configured to:
deliver a command language interface to the user device to facilitate interaction between the user device and the control panel;
receive a control command from the user device, the control command being determined based on a touch event of a visual element of the visual elements on the touch screen; and
perform the received control command.

Optionally, the physical device is configured to send a delete command to the user device, the delete command configured to delete one or more of the received trained model by the user device responsive to at least one of: a time threshold and a proximity threshold.

Viewed from a further aspect, the invention provides a non-transitory computer-readable storage medium storing program instructions, wherein the program instructions are computer-executable, for example on a user device, in order to cause it to implement a method comprising:
obtaining a plurality of images of a physical device;
identifying the physical device and a control panel of the physical device using the one or more images;
training, using the obtained one or more images and the identified physical device and control panel, a plurality of machine learning control operations models of a machine learning system, using supervised learning, to determine control operations of one or more components of the control panel; and
delivering a trained control operations model of the plurality of control operations models to a user device to facilitate contactless control of the physical device by the user device.

The program instructions are computer-executable to implement:
mapping one or more visual elements in the one or more images with one or more control operations of the control panel; and
sending the mapping information to the user device to facilitate contactless control of the physical device by the user device.

The program instructions are computer-executable to implement:
training, using the trained control operations model and the identified physical device and control panel, a mapping model to map the one or more visual elements in the one or more images with one or more control operations of the control panel; and
delivering the trained mapping model to the user device.

Optionally, the trained control operations and mapping models are delivered to the user device by the physical device.

Optionally, the trained mapping model maps visual elements of the one or more components of the control panel, the visual elements obtained from a live image feed of the control panel by the user device and displayed on a touch screen on the user device.

Optionally, the physical device is configured to:
deliver a command language interface to the user device to facilitate interaction between the user device and the control panel;
receive a control command from the user device, the control command being determined based on a touch event of a visual element of the visual elements on the touch screen; and
perform the received control command.

Various other aspects, features, and advantages of the invention will be apparent through the detailed description of the invention and the drawings attached hereto. It is also to be understood that both the foregoing general description and the following detailed description are examples and not restrictive; rather, the scope of protection is defined by the appended claims.

The subject matter, which is regarded as the disclosure, is particularly pointed out and distinctly claimed in the claims at the conclusion of the specification. The following descriptions of the drawings should not be considered limiting in any way. With reference to the accompanying drawings, like elements are numbered alike:
FIG. 1 shows an example of a system for contactless control of a physical device using a user device.
FIGS. 2A-2C show examples of contactless control of physical devices,.
FIG. 3 shows an example of a training system.
FIGS. 4A-4B show examples of machine learning systems.
FIG. 5 shows an example of operations of a contactless control system.
FIG. 6 shows a chart of a method of controlling a physical device with user device generated touch events.
FIG. 7 shows an example of a computer system that may be used to implement aspects of the techniques described herein.

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

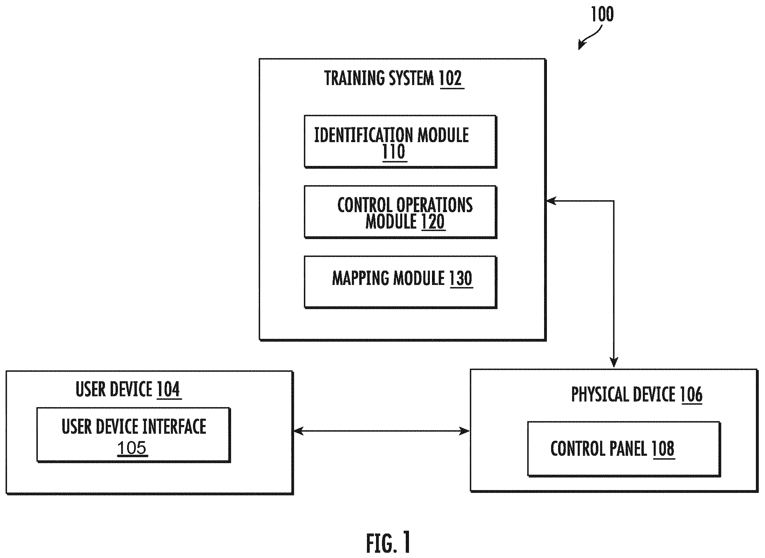

FIG. 1 shows an example of a system 100 for contactless control of a physical device using a user device. System 100 may include a training system 102, a user device 104, a physical device 106, and/or other components. Other components known to one of ordinary skill in the art may be included in system 100 to gather, process, transmit, receive, acquire, and provide information used in conjunction with the disclosed embodiments. In addition, system 100 may further include other components that perform or assist in the performance of one or more processes that are consistent with disclosed embodiments.

One or more components of system 100 may communicate directly through one or more dedicated communication links. System 100 may include a network connecting one or more components of system 100. Networks may be any type of network configured to provide communications between components of system 100. For example, network may be any type of wired or wireless network (including infrastructure) that provides communications, exchanges information, and/or facilitates the exchange of information, such as the Internet, a Local Area Network, near field communication (NFC), optical code scanner, cellular network, Universal Serial Bus (USB), text messaging systems (e.g., SMS, MMS) or other suitable connections that enables the sending and receiving of information between the components of system 100.

Control operations of physical device 106 may be transmitted from the physical device 106 to user device 104 to allow the user to interact with the physical device 106 in a contact-less manner. Physical device 106 may be any device that is controllable via a control panel 108 of the physical device 106. Control of physical device 106 may be accomplished through a user interface 105 of the user device 104. For example, user device 104 may control operations of the physical device via generated touch events from a touch screen of the user device 104. The user device 104 may include a camera. The user may point camera of the user device 104 at the control panel to obtain a live image of the control panel on a touch screen of the user device 104. After authentication by the physical device 106, control operations models and mapping models (obtained by machine learning techniques) may be transmitted from the physical device 106 to the user device 104 to allow the user device 104 to interact with the physical device 106 via touch events on the live image of the control panel.

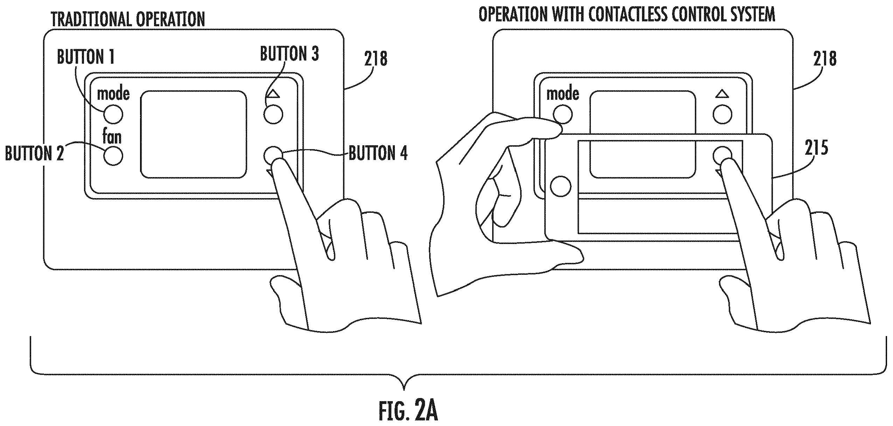

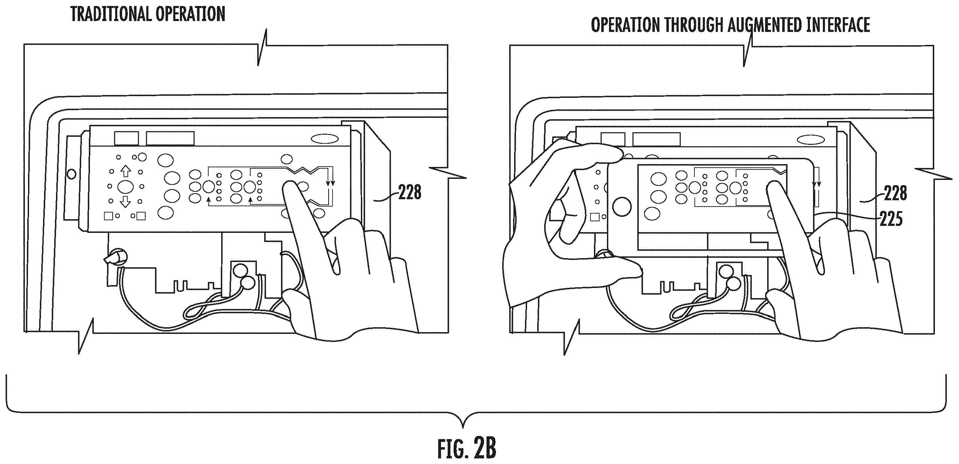

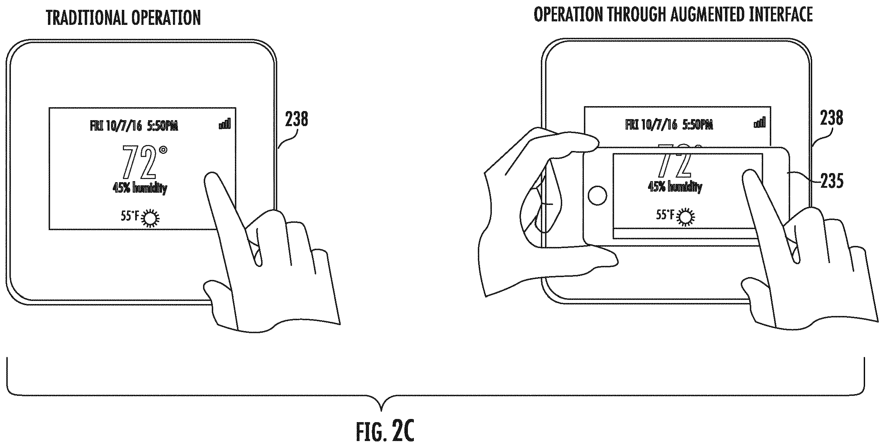

Operations of system 100 may provide a practical contact-less solution to control different physical devices without requiring hardware changes or significant increases in technology or cost to upgrade the physical devices; it also does not require extensive processing form the user device side. Optionally, the system 100 uses local direct communication techniques to interact with the physical device 106, which may provide for a connection that is fast and secure. System 100 may allow access to the control panel in cases where the panel is hard to reach. In some cases, system 100 may help reduce risk spread of infection by avoiding touching the control panel. The physical device 106 may be any device that is controllable via a control panel of the device. Different devices (e.g., personal, domestic, industrial, commercial, etc.) may have different forms of control panels for interaction with humans (e.g., keys, switches, buttons, levers, screens, keyboards, touch screens, and/or any type of human-machine interface). These physical devices may now be operated in a contactless manner using the user's own device. FIGS. 2A-2C show examples of implementations of system 100 in comparison with traditional control of physical devices. For example, FIG.2A an example control of a physical device having a control panel 218 using a touch screen of a mobile phone 215. FIG.2B an example control of a physical device having a control panel 228 using a touch screen of a mobile phone 225. FIG.2C an example control of a physical device having a control panel 238 using a touch screen of a mobile phone 235. It should be appreciated that the mobile device may be viewed as a user device (as described above and below).

The system 100 may provide control security benefits. For example, the system 100 may require the physical presence of the user to be able to obtain a live image of the control panel and to control operations of the physical device. The system 100 may be configured to erase information (e.g., machine learning models) exchanged with the user device if the user device is not in proximity of the physical device or after a predetermined amount of time. That said, not all implementations necessarily provide all of these benefits, and some variants may provide other distinct advantages, which is not to suggest that any other feature described herein may not also be omitted in some implementations.

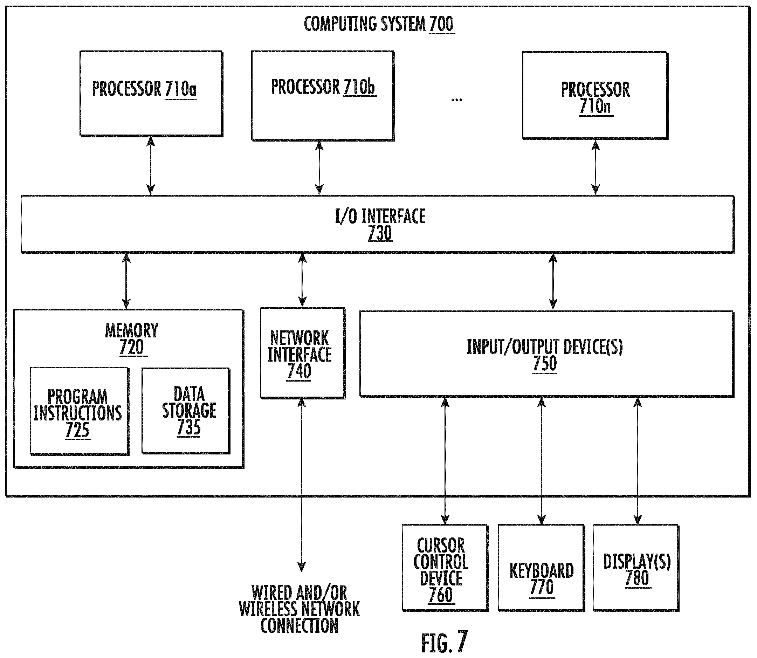

As shown in FIG. 1, system 100 may include training system 102. Training system 102 may include an identification module 110, a machine learning module 120, a mapping module 130, and/or other components. Training system 102 may include computing resources such as processors and memory devices for storing instructions (e.g., computing system 700 described herein below with reference to FIG.7). The processors may be configured to execute software instructions to perform various operations of system 100. The computing resources may include software instructions to perform operations of modules 110, 120, 130, and/or other components of system 100.

Identification module 110 may obtain a plurality of images of one or more physical devices. The images may include images of control panels of the physical devices. The images may include images from different angles, in different light conditions, of different quality, or of different portions of the physical devices or the control panels. The images may be obtained (or extracted) from one or more image databases (e.g., an electronic storage, or other internal or external databases).

Identification module 110 may be configured to identify the one or more physical devices and control panels. Identification module 110 may identify physical device 106 or control panel 108 based on the one or more obtained images of the physical device and/or control panel. Identification module 110 may be configured to identify the physical device based on identification information of the control panel or vice-versa. Identification information identifying the physical device may include type (e.g., air-conditioning A/C unit, coffee maker, computer, safe, etc.), make (e.g., manufacturer), model, and/or other identifying information. Identifying the control panel 108 may include identifying one or more components of the control panel (e.g., keys, switches, buttons, levers, screens, keyboards, touch screens, and/or other control panel components). The step of identifying the control panel 108 may include identifying a type of control panel (e.g., analog, digital, or combination). It should be noted that the identification information described above is not intended to be limiting. A large number of identification information related to physical devices (or control panels) may exist and may be used with system 100.

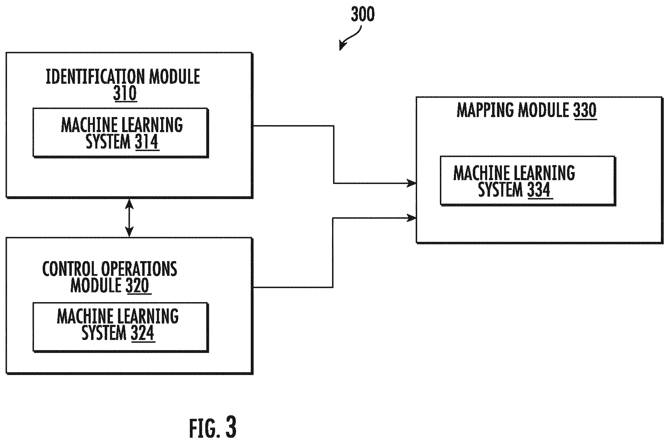

The plurality of images obtained by the identification module 110, may be input in a machine learning system to identify one or more physical devices and/or control panels. FIG. 3 shows an example of a training system 300. Identification module 330 includes machine learning system 314. Machine learning system 314 may train a plurality of machine learning models to identify one or more components of physical devices and control panels. The trained (learned) models may include an identity model to identify components (or entirety of) physical device 106 or control panel 108. Optionally, the machine learning system 314 uses semi-supervised learning to train one or more of the machine learning models. Machine learning system 314 may implement any type of machine learning technique to determine identification information as described herein. Machine learning system 314 may use one or more of supervised learning, semi-supervised, unsupervised learning, reinforcement learning, and/or other machine learning techniques). The machine learning models may include decision trees, support vector machines, regression analysis, Bayesian networks, random forest learning, dimensionality reduction algorithms, boosting algorithms, artificial neural networks (e.g., fully connected neural networks, deep convolutional neural networks, or recurrent neural networks), deep learning, and/or other machine learning models.

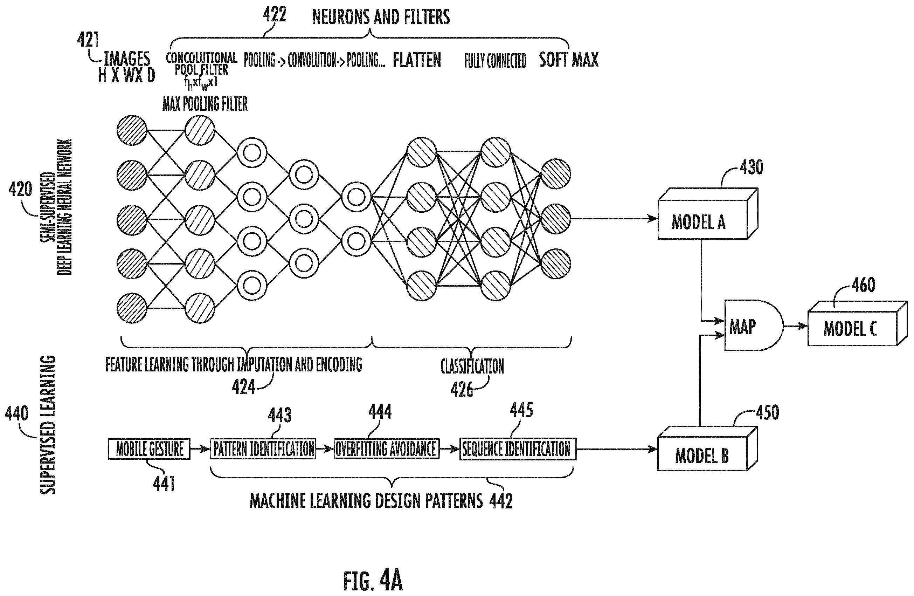

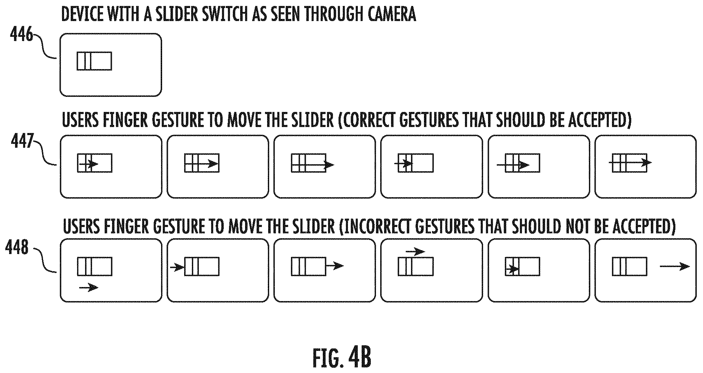

FIG.4 shows examples of machine learning systems. The machine learning system 420 may use semi-supervised deep learning neural networks for analyzing a plurality of images of different physical devices and control panels to train one or more models to identify the physical devices and control panels that control the physical devices. For example, system 420 may use a convolutional neural network CNN 422 for analyzing a plurality of images 421 of a particular device and its control panel (e.g., physical device 106 and control panel 108 of FIG.1) to train identity model 430 (Model A) to identify the physical device and its control panel. CNN 422 may include a plurality of convolutional layers and pooling layers 424 for detecting elements of the images (e.g., learning different features from the images via imputation and encoding), fully connected layers and loss layers 426 for classification of the elements of images. Detecting and classifying different elements of the images is then used to identify the physical device, its control panel, and/or components of the control panel.

Returning to FIG. 1, control operations module 120 may be configured to determine control operations of one or more components of one or more control panels (of physical devices). Control operations of the control panels may be determined based on identification information obtained by identification module 110, and/or on one or more images of one or more components of physical devices 106 and/or control panels. Control operation module 120 may determine control operations for each of the components of the control panels. For example, as shown in FIG. 2A, control operations module may determine functionality/control operations of each of the buttons of control panel 218 (Button 1 controls modes of operations, Button 2 controls a fan, Buttons 3 and 4 is an increase/ decrease type of control).

The plurality of images and/or the identification information determined by the identification module 110, may be input in a machine learning system to determine control operations of one or more components of one or more control panels. As shown in FIG.3, control operations module 320 may include machine learning system 324. Machine learning system 324 may train a plurality of machine learning models to determine control operations of the components of one or more control panels. Optionally, machine learning system 324 uses supervised learning to train one or more of the machine learning models. Machine learning system 324 may implement any type of machine learning technique to enable determination of control operations as described herein. Machine learning system 324 may use one or more of supervised learning, semi-supervised, unsupervised learning, reinforcement learning, machine learning techniques.

As shown in FIG.4, machine learning system 440 may use supervised learning to train control operations model 450 (Model B) to determine control operations of one or more components of control panel 108. The machine learning system 440 may use a decision algorithm 442 to train control operations model 450 using one or more training sets to determine control operations that can be performed by the control panel. The training sets may be used to teach the system how components of a control panel look like. For example, one or more the training sets may teach the system what a push-button look like, how a slider switch looks like, etc. The training sets may be built-over time from captured images of one or more physical devices. An initial training set may include about 100-500 images of each component type (push-button, slide switch etc.). That said, training sets of other sizes (smaller or larger) may be used.

Pattern identification step 443 of decision algorithm 442 may use mobile gesture 441 to train control operations model 450 to detect the user-initiated gesture as a "control" gesture. As an example, when the user sees a push-button of a physical device from his mobile camera, he pushes it by using a "push gesture" on the mobile screen, which is synonymous to a "touch" on that circular camera image of the button. But how does a slider switch work? In an example where the physical slider switch is a horizontal slider, the user has to slide his finger from left to right or right to left to switch on or off that slider-switch. But how much to the left or right? This will depend on the size of the image the user sees in the camera. To be able to detect the user-initiated gesture as a "control" gesture, the control operations model is trained using pattern identification algorithm 443 to identify the switch in the camera image 446 (shown in FIG.4B). For example, the model identifies the switch (position, size, etc.) at the point where the user puts his finger initially. An overfitting avoidance step 444 may be used to map the correct components of the control panel (seen through the camera). For example, the model should not detect any rectangular object as the slider switch (not all that is rectangular is a slider switch). Overfitting avoidance may be used to map the correct gestures. For example, just because the user can swipe from left to right anywhere on the screen doesn't mean he means to operate that particular switch (seen on his screen through the camera). Example 447 (shown in FIG.4B) illustrate a correct gesture that should be accepted, and example 448 (shown in FIG.4B) illustrate an incorrect gesture that shouldn't be accepted. A sequence identification step 445 may be used to identify the tiny steps in the gesture itself. For example, left to right (or vice versa) for a slider switch; starting at a point and moving in a clockwise direction for a rotary stitch; etc. A sequence of operations may constitute a valid control operation (e.g., switch A on, switch B on, switch C off, etc.).

Returning to FIG. 1, mapping module 130 is configured to map one or more images (or visual elements in the one or more images) of components of the identified control panels with one or more control operations of the control panels. Mapping module 130 may receive images (or visual elements) of the components from identification module 110 and control operations information from control operations module 120. For example, mapping module 130 may map an image of Button 1 of FIG. 2 with mode control operations. Optionally, mapping module 130 uses a machine learning system to train a plurality of mapping models to map one or more images (or visual elements) of components of the identified control panels with one or more control operations of the control panels. The mapping information may be sent to the user device to facilitate contactless control of the physical device by the user device.

As shown in FIG. 3, mapping module 330 may use a machine learning system 334 to train a mapping model to map images (or visual elements) of one or more components of the control panel with one or more control operations of the control panel. For example, machine learning system 470 (shown in FIG. 4, the) uses the trained control operation model 450 and the trained identification model 430 as inputs to train mapping model 460. Trained mapping model 460 is then used to map images of each component of the control panel with possible control operations. Trained mapping model 460 may be sent to the user device along with the other trained models to facilitate interaction with the physical device. It should be noted that any machine learning systems, algorithms and models may be used mapping module 330.

It is to be understood that the machine learning systems are described here as examples for techniques for identifying the physical devices and control panels, determining control operations of the control panels, and mapping images of the control panel with the control operations. However, techniques, are also contemplated by the present disclosure. As such, any technique for identifying the physical devices and control panels, determining control operations of the control panels, and mapping images of the control panel with the control operations are contemplated by the present disclosure.

The trained models may be stored on an electronic storage media. The electronic storage media may be located in the physical device 106, the control panel 108, and/or located remotely (e.g., on a remote server, cloud-based storage, etc.). For example, the trained models may be stored remotely and accessed by the physical device upon request. In some cases, the physical device may request the trained models and store them locally, temporarily, for a duration of an interaction with a user device. The physical device 106 (or control panel 108) may deliver/send one or more of the trained models to user device 104 to facilitate contactless control of the physical device by user device 104. For example, physical device 106 may deliver one or more of a trained control operations model (e.g., model 450 of FIG.4), a trained mapping model (e.g., model 460 of FIG.4), a trained identity model (e.g., model 430 of FIG.4), and/or other trained models to facilitate interaction.

Communication between physical device 106 and user device 104 may be accomplished via a communication network. The communications network may include a direct communication network. Direct communications may use any suitable technologies, including, for example, BLUETOOTH^{™}, BLUETOOTH LE^{™} (BLE), Wi-Fi, near field communications (NFC), or other suitable communication methods that provide a medium for transmitting data between separate devices. Physical device 106 and user device 104 may communicate directly through dedicated communication link(s). Using direct communication technologies may provide for a secure interaction between the user device and the physical device as both devices should be in proximate to each other to establish a communication link.

The communication network may comprise any type of computer networking arrangement used to exchange data. For example, Internet, a private data network, a virtual private network using a public network, a Wi-Fi network, a LAN or WAN network, A frequency (RF) link, and/or other suitable connections that may enable information exchange among various components between physical device 106 and user device 104. Network 295 may also include a public switched telephone network ("PSTN") and/or a wireless cellular network.

The physical device 106 may deliver a data and command interface language to the user device along with the trained models to facilitate interaction with the user device. The data and command interface language may be any command interface that allow communication/interaction between the physical device and the user device. For example:

```
 {
       "detectedCommand": "lightOn",
       "confidence": 0.93,
       "rel-x": -2,
       "rel-y": 0,
       "hor-span": 15,
       "ver-span": 0
 }
```

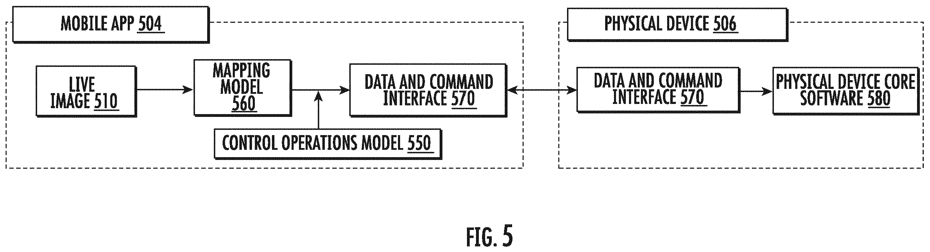

FIG. 5 shows an example of operations of a contactless control system. The user device may interact with physical device 506 via a mobile application 504. A user of the user device may launch the mobile application and point a camera of the user device at a control panel of the physical device to obtain a live image 510 of the control panel. The physical device may perform an authentication step before allowing interaction with the user device. After authentication, the physical device (or the control panel) sends control operations model 550 and mapping model 560 along with data and command interface 570 to facilitate interaction with the user device. After receiving the trained models, the user device may send control commands to the control panel (e.g., via a user interface of the user device). The control panel performs the commands (for example via physical device core software 580). The control panel may be configured to send a status update to the user device after completing the command.

The user device may send the control commands via touch events on a touch screen of the user device where the live image is displayed. For example, the user device may send the control commands in response to the user touching a visual element of the live image of the control panel on the touch screen. The user device uses trained control operations model 550 and mapping model 560 to determine the operational command corresponding to each visual element of the live image on the touch screen. Different touch screen technologies and touch events methods may be used. For example, resistive, capacitive, optical, acoustic wave, and/or other sensing touch technology. It should be appreciated that examples of control via touch screen described herein are to be taken as examples for illustration purposes only. Other techniques of contactless control using any suitable user interface of the user device are contemplated within the present disclosure. For example, control operations of the physical device may be performed via cursor control devices (e.g., mouse), keyboards, keypads, touchpads, touchscreens, scanning devices, voice or optical recognition devices, and/or any other user interface of the user device for entering, retrieving data.

The physical device 106 may authenticate user device 104 (for example before sending the trained models). The physical device 106 may include an authentication program (or application) configured to authenticate the user (and/or user device 104) via multi-factor authentication, proximity authentication, passwords, exchange of keys, pairing, registration, forming a private link, or other forms of authentication. The system 100 may define one or more control rules. For example, some user devices may be granted access to more control operations than others (e.g., based on security level of the user/user device, time of the day, location, type of device, historical data of previous interactions, etc.)

The system 100 may be configured to define a delete command configured to delete the trained models based on one or more thresholds or conditions. The delete command may be sent to the physical device along with the trained models (e.g., to be stored or upon request from the physical device). For example, The physical device 106 (or control panel 108) may be configured to send the delete command along with the trained models to the user device such that after a control session is over, the trained models and the data and command interface are deleted from the user device. A control session (session during which the user device can control operations of the physical device) may be defined based on time, proximity, number of control operations, type of user/user device, or any other factor. The system 100 may define one or more thresholds after which a control session is over. For example, a time threshold (in seconds, minutes, hours, etc.), a proximity threshold (proximity of the user device to the physical device in any distance measurement), operations threshold (number of operations allowed per session), and/or other thresholds. The system 100 may be configured such that a control session is over (therefore models deleted) responsive to the loss of the live image, loss of the connection/pairing between the devices, etc. For example, the physical device may receive indications/updates (e.g., via the data and command interface) of the status of the live image of the user device. In response to receiving an indication that the live image is lost the control session is over.

The system 100 includes a software development kit or SDK. This allows functionality of the system to be integrated into third-party applications (e.g., physical device and/or user device applications). The SDK can include application programming interfaces, libraries, drivers, documentations, or tools (e.g., debugging tools, tracking tools, optimization tools) to allow the third-party access to the system's functionality. For example, the SDK can include one or more application programming interfaces (or APIs) that allow software programmers to integrate their software with features and code from the SDK. Other supporting material such as sample code and supporting technical notes can be included to help software programmers make use of the SDK.

It should be appreciated that the illustrated components are depicted as discrete functional blocks, but the proposals herein are not limited to systems in which the functionality described herein is organized as illustrated. The functionality provided by each of the components may be provided by software or hardware modules that are differently organized than is presently depicted, for example such software or hardware may be intermingled, conjoined, replicated, broken up, distributed (e.g., within a data center or geographically), or otherwise differently organized. The functionality described herein may be provided by one or more processors of one or more computers executing code stored on a tangible, non-transitory, machine readable medium.

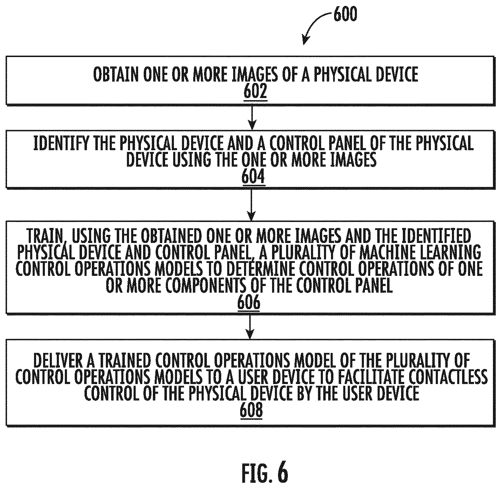

FIG.6 illustrates an example method 600 for contactless control of a physical device. The operations of method 600 presented below are intended to be illustrative. In some implementations, method 600 may be accomplished with one or more additional operations not described and/or without one or more of the operations discussed. Additionally, the order in which the operations of method 600 are illustrated in FIG. 6 and described below is not intended to be limiting

The methods may be implemented in one or more processing devices (e.g., a digital processor, an analog processor, a digital circuit designed to process information, an analog circuit designed to process information, a state machine, and/or other mechanisms for electronically processing information). The processing devices may include one or more devices executing some or all of the operations of the methods in response to instructions stored electronically on an electronic storage medium. The processing devices may include one or more devices configured through hardware, firmware, and/or software to be specifically designed for execution of one or more of the operations of the method.

At an operation 602 of method 600, a plurality of images of a physical device may be obtained. The operation 602 may be performed by identification module, the same as or similar to identification module 110 (shown in FIG.1 and described herein).

At an operation 604 of method 600, the physical device and a control panel of the physical device may be identified. The operation 604 may be performed by identification module, the same as or similar to identification module 110 (shown in FIG.1 and described herein).

At an operation 606 of method 600, a plurality of machine learning control operations models of a machine learning system is trained using supervised learning to determine control operations of one or more components of the control panel. A mapping model may be trained, using the trained control operations model and the identified physical device and control panel, to map the one or more visual elements in the one or more images with one or more control operations of the control panel. The trained mapping model maps visual elements of the one or more components of the control panel, the visual elements obtained from a live image feed of the control panel by the user device and displayed on a touch screen on the user device. The operation 606 may be performed by machine learning system 120, the same as or similar to machine learning system 120 (shown in FIG.1 and described herein).

At operation 608 of method 600, a trained control operations model of the plurality of control operations models may be delivered to a user device to facilitate contactless control of the physical device by the user device. The trained mapping model may be delivered to the user device. A command language interface may be delivered to the user device to facilitate interaction between the user device and the control panel. The operation 608 may be performed by a physical device, the same as or similar to physical device 106 (shown in FIG.1 and described herein).

Embodiments of one or more techniques of contactless control of a physical device as described herein may be executed on one or more computer systems, which may interact with various other devices. One such computer system is illustrated by FIG. 7. FIG. 7 shows an example of a computer system that may be used to implement aspects of the techniques described herein. Computer system 700 may include any combination of hardware or software that can perform the indicated functions, including, but not limited to, a computer, personal computer system, desktop computer, laptop, notebook, or netbook computer, mainframe computer system, handheld computer, workstation, network computer, a camera, a set top box, a mobile device, network device, internet appliance, PDA, wireless phones, pagers, a consumer device, video game console, handheld video game device, application server, storage device, a peripheral device such as a switch, modem, router, or other type of computing or electronic device.

In the illustrated embodiment, computer system 700 includes one or more processors 710 coupled to a system memory 720 via an input/output (I/O) interface 730. Computer system 700 further includes a network interface 740 coupled to I/O interface 730, and one or more input/output devices 750, such as cursor control device 760, keyboard 770, and display(s) 780. It is contemplated that embodiments may be implemented using a single instance of computer system 700, while in other embodiments multiple such systems, or multiple nodes making up computer system 700, may be configured to host different portions or instances of embodiments. For example, in one embodiment some elements may be implemented via one or more nodes of computer system 700 that are distinct from those nodes implementing other elements.

The computer system 700 may be a uniprocessor system including one processor 710, or a multiprocessor system including several processors 710 (e.g., two, four, eight, or another suitable number). Processors 710 may be any suitable processor capable of executing instructions. may be comprised of semiconductor(s) and/or transistors (e.g., electronic integrated circuits (ICs)). In such a context, processor-executable instructions may be electronically executable instructions. For example, processors 710 may be general-purpose or embedded processors implementing any of a variety of instruction set architectures (ISAs), such as the x86, PowerPC, SPARC, or MIPS ISAs, or any other suitable ISA. In multiprocessor systems, each of processors 710 may commonly, but not necessarily, implement the same ISA.

At least one processor 710 may be a graphics processing unit. A graphics processing unit or GPU may be considered a dedicated graphics-rendering device for a personal computer, workstation, game console or other computing or electronic device. Modern GPUs may be very efficient at manipulating and displaying computer graphics, and their highly parallel structure may make them more effective than typical CPUs for a range of complex graphical algorithms. For example, a graphics processor may implement a number of graphics primitive operations in a way that makes executing them much faster than drawing directly to the screen with a host central processing unit (CPU). The image processing methods disclosed herein may, at least in part, be implemented by program instructions configured for execution on one of, or parallel execution on two or more of, such GPUs. The GPU(s) may implement one or more application programmer interfaces (APIs) that permit programmers to invoke the functionality of the GPU(s). Suitable GPUs may be commercially available from vendors such as NVIDIA Corporation, ATI Technologies (AMD), and others. One or more computers may include multiple processors operating in parallel. A processor may be a central processing unit (CPU) or a special-purpose computing device, such as graphical processing unit (GPU), an integrated circuit or on-chip system, an application-specific integrated circuit (ASIC), a field-programmable gate array (FPGA), a complex programmable logic device (CPLD), or application-specific integrated circuits.

System memory 720 may be configured to store program instructions and/or data accessible by processor 710. System memory 720 may be implemented using any suitable memory technology, such as static random-access memory (SRAM), synchronous dynamic RAM (SDRAM), nonvolatile/Flash-type memory, or any other type of memory. In the Figures, program instructions and data implementing desired functions, such as those described in this disclosure, are shown stored within system memory 720 as program instructions 725 and data storage 735, respectively. Alternatively, program instructions and/or data may be received, sent or stored upon different types of computer-accessible media or on similar media separate from system memory 720 or computer system 700. Generally speaking, a computer-accessible medium may include storage media or memory media such as magnetic or optical media, e.g., disk or CD/DVD-ROM coupled to computer system 700 via I/O interface 730. Program instructions and data stored via a computer-accessible medium may be transmitted by transmission media or signals such as electrical, electromagnetic, or digital signals, which may be conveyed via a communication medium such as a network and/or a wireless link, such as may be implemented via network interface 740.

The I/O interface 730 may be configured to coordinate I/O traffic between processor 710, system memory 720, and any peripheral devices in the device, including network interface 740 or other peripheral interfaces, such as input/output devices 750. The I/O interface 730 may perform any necessary protocol, timing or other data transformations to convert data signals from one component (e.g., system memory 720) into a format suitable for use by another component (e.g., processor 710). The I/O interface 730 may include support for devices attached through various types of peripheral buses, such as a variant of the Peripheral Component Interconnect (PCI) bus standard or the Universal Serial Bus (USB) standard, for example. The function of I/O interface 730 may be split into two or more separate components, such as a north bridge and a south bridge, for example. In addition, some or all of the functionality of I/O interface 730, such as an interface to system memory 720, may be incorporated directly into processor 710.

Network interface 740 may be configured to allow data to be exchanged between computer system 700 and other devices attached to a network, such as other computer systems, or between nodes of computer system 700. The network interface 740 may support communication via wired or wireless general data networks, such as any suitable type of Ethernet network, for example, via telecommunications/telephony networks such as analog voice networks or digital fiber communications networks; via storage area networks such as Fibre Channel SANs, or via any other suitable type of network and/or protocol.

Input/output devices 750 may, include one or more display terminals, cursor control devices (e.g., mouse), keyboards, keypads, touchpads, touchscreens, scanning devices, voice or optical recognition devices, or any other devices suitable for entering or retrieving data by one or more computer system 700. Multiple input/output devices 750 may be present in computer system 700 or may be distributed on various nodes of computer system 700. Similar input/output devices may be separate from computer system 700 and may interact with one or more nodes of computer system 700 through a wired or wireless connection, such as over network interface 740.

The scope of protection is defined by the appended claims. Those skilled in the art will appreciate that computer system 700 is merely illustrative and is not intended to limit the scope of the present disclosure. In particular, computer system 700 may also be connected to other devices that are not illustrated, or instead may operate as a stand-alone system. In addition, the functionality provided by the illustrated components may be combined in fewer components or distributed in additional components. Similarly, The functionality of some of the illustrated components may not be provided and/or other additional functionality may be available.

Accordingly, this description and the drawings are to be construed as illustrative only and are for the purpose of teaching those skilled in the art the general manner of carrying out the invention. It is to be understood that the forms of the invention shown and described herein are to be taken as examples of embodiments. Elements and materials may be substituted for those illustrated and described herein, parts and processes may be reversed or omitted, and certain features of the invention may be utilized independently, all as would be apparent to one skilled in the art after having the benefit of this description of the invention. Changes may be made in the elements described herein without departing from the scope of the invention as described in the following claims. Headings used herein are for organizational purposes only and are not meant to be used to limit the scope of the description.

As used throughout this application, the word "may" is used in a permissive sense (i.e., meaning having the potential to), rather than the mandatory sense (i.e., meaning must). The words "include", "including", and "includes" and the like mean including, but not limited to. As used throughout this application, the singular forms "a," "an," and "the" include plural referents unless the content explicitly indicates otherwise. Thus, for example, reference to "an element" or "a element" includes a combination of two or more elements, notwithstanding use of other terms and phrases for one or more elements, such as "one or more." The term "or" is, unless indicated otherwise, non-exclusive, i.e., encompassing both "and" and "or." Terms describing conditional relationships, e.g., "in response to X, Y," "upon X, Y,", "if X, Y," "when X, Y," and the like, encompass causal relationships in which the antecedent is a necessary causal condition, the antecedent is a sufficient causal condition, or the antecedent is a contributory causal condition of the consequent, e.g., "state X occurs upon condition Y obtaining" is generic to "X occurs solely upon Y" and "X occurs upon Y and Z." Such conditional relationships are not limited to consequences that instantly follow the antecedent obtaining, as some consequences may be delayed, and in conditional statements, antecedents are connected to their consequents, e.g., the antecedent is relevant to the likelihood of the consequent occurring. Further, unless otherwise indicated, statements that one value or action is "based on" another condition or value encompass both instances in which the condition or value is the sole factor and instances in which the condition or value is one factor among a plurality of factors. Unless otherwise indicated, statements that "each" instance of some collection have some property should not be read to exclude cases where some otherwise identical or similar members of a larger collection do not have the property, i.e., each does not necessarily mean each and every. Unless specifically stated otherwise, as apparent from the discussion, it is appreciated that throughout this specification discussions utilizing terms such as "processing," "computing," "calculating," "determining" or the like refer to actions or processes of a specific apparatus, such as a special purpose computer or a similar special purpose electronic processing/computing device.

It is intended that the present invention not be limited to the particular embodiment disclosed as the best mode contemplated for carrying out this present disclosure, but that the present invention will include all embodiments falling within the scope of the claims.

## Claims

1. A system (100) for contactless control of a physical device, the system comprising:
a user device (104);
a physical device (106);
a training system (102);
wherein the training system comprises:
at least one processor (710); and
memory (720) storing instructions executable by the at least one processor, the instructions when executed cause the training system to:
obtain one or more images of the physical device;
identify the physical device and a control panel of the physical device using the one or more images;
train, using the obtained one or more images and the identified physical device and control panel, a machine learning control operations model (450) of a machine learning system (334), using supervised learning, to determine control operations of one or more components of the control panel; and
deliver a trained control operations model to the user device to facilitate contactless control of the physical device by the user device;
**characterized by**:
training, using the trained control operations model and the identified physical device and control panel, a mapping model to map the one or more visual elements in the one or more images with one or more control operations of the control panel; and
delivering the trained mapping model to the user device.

2. The system of claim 1, wherein the trained control operations and mapping models are delivered to the user device by the physical device.

3. The system of claim 1 or 2, wherein the trained mapping model maps visual elements of the control panel, the visual elements obtained from a live image of the control panel by the user device and displayed on a display of the user device.

4. The system of claim 3, wherein the physical device is configured to:
deliver a command language interface to the user device to facilitate interaction between the user device and the control panel;
receive a control command from the user device, the control command being determined based on a touch event of a visual element of the visual elements on the touch screen; and
perform the received control command.

5. The system of claim 3 or 4, wherein the physical device is configured to send a delete command to the user device, the delete command configured to delete one or more of the received trained models by the user device responsive to at least one of: a time threshold and a proximity threshold.

6. A method (600) for contactless control of a physical device, the method being implemented in a computing system comprising a user device (104), a physical device (!06) and a training system (102), wherein the training system comprises at least one processor and memory storing instructions for:
obtaining (602) a plurality of images of the physical device;
identifying (604) the physical device and a control panel of the physical device using the one or more images;
training (606), using the obtained one or more images and the identified physical device and control panel, a machine learning control operations model (450) of a machine learning system, using supervised learning, to determine control operations of one or more components of the control panel; and
delivering (608) a trained control operations model to the user device to facilitate contactless control of the physical device by the user device;
**characterized by**:
training, using the trained control operations model and the identified physical device and control panel, a mapping model to map the one or more visual elements in the one or more images with one or more control operations of the control panel; and
delivering the trained mapping model to the user device.

7. The method of claim 6, wherein the trained control operations and mapping models are delivered to the user device by the physical device.

8. The method of claim 6 or 7, wherein the trained mapping model maps visual elements of the one or more components of the control panel, the visual elements obtained from a live image feed of the control panel by the user device and displayed on a touch screen on the user device.

9. The method of claim 8, wherein the physical device is configured to:
deliver a command language interface to the user device to facilitate interaction between the user device and the control panel;
receive a control command from the user device, the control command being determined based on a touch event of a visual element of the visual elements on the touch screen; and
perform the received control command.

10. The method of claim 8 or 9, wherein the physical device is configured to send a delete command to the user device, the delete command configured to delete one or more of the received trained model by the user device responsive to at least one of: a time threshold and a proximity threshold.

11. A non-transitory computer-readable storage medium storing program instructions, wherein the program instructions are computer-executable to implement a method as claimed in any of claims 6 to 10.

## Patentansprüche

1. System (100) zur berührungslosen Steuerung einer physischen Vorrichtung, wobei das System Folgendes umfasst:
eine Benutzervorrichtung (104);
eine physische Vorrichtung (106);
ein Trainingssystem (102);
wobei das Trainingssystem Folgendes umfasst:
mindestens einen Prozessor (710); und
Speicher (720), der Anweisungen speichert, die durch den mindestens einen Prozessor ausführbar sind, wobei die Anweisungen bei Ausführung das Trainingssystem zu Folgendem veranlassen:
Erlangen eines oder mehrerer Bilder der physischen Vorrichtung;
Identifizieren der physischen Vorrichtung und eines Bedienfelds der physischen Vorrichtung unter Verwendung des einen oder der mehreren Bilder;
Trainieren, unter Verwendung des erlangten einen oder der erlangten mehreren Bilder und der identifizierten physischen Vorrichtung und des identifizierten Bedienfelds, eines Maschinenlern-Steueroperationenmodells (450) eines Maschinenlernsystems (334), das überwachtes Lernen verwendet, um Steueroperationen einer oder mehrerer Komponenten des Bedienfelds zu bestimmen; und
Bereitstellen eines trainierten Steueroperationenmodells an die Benutzervorrichtung, um eine berührungslose Steuerung der physischen Vorrichtung durch die Benutzervorrichtung zu ermöglichen;
**gekennzeichnet durch**:
Trainieren, unter Verwendung des trainierten Steueroperationenmodells und der identifizierten physischen Vorrichtung und des identifizierten Bedienfelds, eines Abbildungsmodells, um das eine oder die mehreren visuellen Elemente in dem einen oder den mehreren Bildern mit einer oder mehreren Steueroperationen des Bedienfelds abzubilden; und
Bereitstellen des trainierten Abbildungsmodells an die Benutzervorrichtung.

2. System nach Anspruch 1, wobei die trainierten Steueroperationen und Abbildungsmodelle der Benutzervorrichtung durch die physische Vorrichtung bereitgestellt werden.

3. System nach Anspruch 1 oder 2, wobei das trainierte Abbildungsmodell visuelle Elemente des Bedienfelds abbildet, wobei die visuellen Elemente von einem Livebild des Bedienfelds durch die Benutzervorrichtung erlangt und auf einer Anzeige der Benutzervorrichtung angezeigt werden.

4. System nach Anspruch 3, wobei die physische Vorrichtung zu Folgendem konfiguriert ist:
Bereitstellen einer Befehlssprachschnittstelle an die Benutzervorrichtung, um Interaktion zwischen der Benutzervorrichtung und dem Bedienfeld zu ermöglichen;
Empfangen eines Steuerbefehls von der Benutzervorrichtung, wobei der Steuerbefehl basierend auf einem Berührungsereignis eines visuellen Elements der visuellen Elemente auf dem Berührungsbildschirm bestimmt wird; und
Durchführen des empfangenen Steuerbefehls.

5. System nach Anspruch 3 oder 4, wobei die physische Vorrichtung dazu konfiguriert ist, einen Löschbefehl an die Benutzervorrichtung zu senden, wobei der Löschbefehl dazu konfiguriert ist, eines oder mehrere der empfangenen trainierten Modelle durch die Benutzervorrichtung als Reaktion auf mindestens einen von Folgenden zu löschen: einem Zeitschwellenwert und einem Näherungsschwellenwert.

6. Verfahren (600) zur berührungslosen Steuerung eines physischen Vorrichtung, wobei das Verfahren in einem Computersystem implementiert ist, das eine Benutzervorrichtung (104), eine physische Vorrichtung (106) und ein Trainingssystem (102) umfasst, wobei das Trainingssystem mindestens einen Prozessor und Speicher umfasst, der Anweisungen für Folgendes speichert:
Erlangen (602) einer Vielzahl von Bildern der physischen Vorrichtung;
Identifizieren (604) der physischen Vorrichtung und eines Bedienfelds der physischen Vorrichtung unter Verwendung des einen oder der mehreren Bilder;
Trainieren (606), unter Verwendung des erlangten einen oder der erlangten mehreren Bilder und der identifizierten physischen Vorrichtung und des identifizierten Bedienfelds, eines Maschinenlern-Steueroperationenmodells (450) eines Maschinenlernsystems, das überwachtes Lernen verwendet, um Steueroperationen einer oder mehrerer Komponenten des Bedienfelds zu bestimmen; und
Bereitstellen (608) eines trainierten Steueroperationenmodells an die Benutzervorrichtung, um eine berührungslose Steuerung der physischen Vorrichtung durch die Benutzervorrichtung zu ermöglichen;
**gekennzeichnet durch**:
Trainieren, unter Verwendung des trainierten Steueroperationenmodells und der identifizierten physischen Vorrichtung und des identifizierten Bedienfelds, eines Abbildungsmodells, um das eine oder die mehreren visuellen Elemente in dem einen oder den mehreren Bildern mit einer oder mehreren Steueroperationen des Bedienfelds abzubilden; und
Bereitstellen des trainierten Abbildungsmodells an die Benutzervorrichtung.

7. Verfahren nach Anspruch 6, wobei die trainierten Steueroperationen und Abbildungsmodelle der Benutzervorrichtung durch die physische Vorrichtung bereitgestellt werden.

8. Verfahren nach Anspruch 6 oder 7, wobei das trainierte Abbildungsmodell visuelle Elemente der einen oder mehreren Komponenten des Bedienfelds abbildet, wobei die visuellen Elemente von einer Livebildeinspeisung des Bedienfelds durch die Benutzervorrichtung erlangt und auf einem Berührungsbildschirm auf der Benutzervorrichtung angezeigt werden.

9. Verfahren nach Anspruch 8, wobei die physische Vorrichtung zu Folgendem konfiguriert ist:
Bereitstellen einer Befehlssprachschnittstelle an die Benutzervorrichtung, um Interaktion zwischen der Benutzervorrichtung und dem Bedienfeld zu ermöglichen;
Empfangen eines Steuerbefehls von der Benutzervorrichtung, wobei der Steuerbefehl basierend auf einem Berührungsereignis eines visuellen Elements der visuellen Elemente auf dem Berührungsbildschirm bestimmt wird; und
Durchführen des empfangenen Steuerbefehls.

10. Verfahren nach Anspruch 8 oder 9, wobei die physische Vorrichtung dazu konfiguriert ist, einen Löschbefehl an die Benutzervorrichtung zu senden, wobei der Löschbefehl dazu konfiguriert ist, eines oder mehrere des empfangenen trainierten Modells durch die Benutzervorrichtung als Reaktion auf mindestens einen von Folgenden zu löschen: einem Zeitschwellenwert und einem Näherungsschwellenwert.

11. Nicht transitorisches computerlesbares Speichermedium, das Programmanweisungen speichert, wobei die Programmanweisungen durch einen Computer ausführbar sind, um ein Verfahren nach einem der Ansprüche 6 bis 10 zu implementieren.

## Revendications

1. Système (100) de commande sans contact d'un dispositif physique, le système comprenant :
un dispositif utilisateur (104) ;
un dispositif physique (106) ;
un système de formation (102) ;
dans lequel le système de formation comprend :
au moins un processeur (710) ; et
une mémoire (720) stockant des instructions exécutables par l'au moins un processeur, les instructions, lorsqu'elles sont exécutées, amènent le système de formation à :
obtenir une ou plusieurs images du dispositif physique ;
identifier le dispositif physique et un panneau de commande du dispositif physique à l'aide des une ou plusieurs images ;
former, à l'aide des une ou plusieurs images obtenues et du dispositif physique identifié et du panneau de commande, un modèle d'opérations de commande d'apprentissage automatique (450) d'un système d'apprentissage automatique (334), à l'aide de l'apprentissage supervisé, pour déterminer des opérations de commande d'un ou plusieurs composants du panneau de commande ; et
fournir un modèle d'opérations de commande formé au dispositif utilisateur pour faciliter la commande sans contact du dispositif physique par le dispositif utilisateur ;
**caractérisé par** :
la formation, à l'aide du modèle d'opérations de commande formé et du dispositif physique et du panneau de commande identifiés, d'un modèle de mappage pour mapper les un ou plusieurs éléments visuels dans les une ou plusieurs images avec une ou plusieurs opérations de commande du panneau de commande ; et
la fourniture du modèle de mappage formé au dispositif utilisateur.

2. Système selon la revendication 1, dans lequel les opérations de commande et les modèles de mappage formés sont fournis au dispositif utilisateur par le dispositif physique.

3. Système selon la revendication 1 ou 2, dans lequel le modèle de mappage formé mappe des éléments visuels du panneau de commande, les éléments visuels étant obtenus à partir d'une image en direct du panneau de commande par le dispositif utilisateur et affichés sur un écran du dispositif utilisateur.

4. Système selon la revendication 3, dans lequel le dispositif physique est configuré pour :
fournir une interface de langage d'instruction au dispositif utilisateur pour faciliter l'interaction entre le dispositif utilisateur et le panneau de commande ;
recevoir une instruction de commande du dispositif utilisateur, l'instruction de commande étant déterminée sur la base d'un événement tactile d'un élément visuel des éléments visuels sur l'écran tactile ; et
réaliser l'instruction de commande reçue.

5. Système selon la revendication 3 ou 4, dans lequel le dispositif physique est configuré pour envoyer une instruction de suppression au dispositif utilisateur, l'instruction de suppression étant configurée pour supprimer l'un ou plusieurs des modèles formés reçus par le dispositif utilisateur en réponse à au moins l'un des éléments suivants : un seuil de temps et un seuil de proximité.

6. Procédé (600) de commande sans contact d'un dispositif physique, le procédé étant mis en œuvre dans un système informatique comprenant un dispositif utilisateur (104), un dispositif physique (106) et un système de formation (102), dans lequel le système de formation comprenant au moins un processeur et une mémoire stockant des instructions pour :
obtenir (602) une pluralité d'images du dispositif physique ;
identifier (604) le dispositif physique et un panneau de commande du dispositif physique à l'aide des une ou plusieurs images ;
former (606), à l'aide des une ou plusieurs images obtenues et du dispositif physique identifié et du panneau de commande, un modèle d'opérations de commande d'apprentissage automatique (450) d'un système d'apprentissage automatique, à l'aide de l'apprentissage supervisé, pour déterminer des opérations de commande d'un ou plusieurs composants du panneau de commande ; et
fournir (608) un modèle d'opérations de commande formé au dispositif utilisateur pour faciliter la commande sans contact du dispositif physique par le dispositif utilisateur ;
**caractérisé par** :
la formation, à l'aide du modèle d'opérations de commande formé et du dispositif physique et du panneau de commande identifiés, d'un modèle de mappage pour mapper les un ou plusieurs éléments visuels dans les une ou plusieurs images avec une ou plusieurs opérations de commande du panneau de commande ; et
la fourniture du modèle de mappage formé au dispositif utilisateur.

7. Procédé selon la revendication 6, dans lequel les opérations de commande et les modèles de mappage formés sont fournis au dispositif utilisateur par le dispositif physique.

8. Procédé selon la revendication 6 ou 7, dans lequel le modèle de mappage formé mappe des éléments visuels des un ou plusieurs composants du panneau de commande, les éléments visuels étant obtenus à partir d'une charge d'image en direct du panneau de commande par le dispositif utilisateur et affichés sur un écran du dispositif utilisateur.

9. Procédé selon la revendication 8, dans lequel le dispositif physique est configuré pour :
fournir une interface de langage d'instruction au dispositif utilisateur pour faciliter l'interaction entre le dispositif utilisateur et le panneau de commande ;
recevoir une instruction de commande du dispositif utilisateur, l'instruction de commande étant déterminée sur la base d'un événement tactile d'un élément visuel des éléments visuels sur l'écran tactile ; et
réaliser l'instruction de commande reçue.

10. Procédé selon la revendication 8 ou 9, dans lequel le dispositif physique est configuré pour envoyer une instruction de suppression au dispositif utilisateur, l'instruction de suppression étant configurée pour supprimer l'un ou plusieurs des modèles formés reçus par le dispositif utilisateur en réponse à au moins l'un des éléments suivants : un seuil de temps et un seuil de proximité.

11. Support de stockage non transitoire lisible par ordinateur stockant des instructions de programme, dans lequel les instructions de programme sont exécutables par ordinateur pour mettre en œuvre un procédé selon l'une quelconque des revendications 6 à 10.
